# EUROPEAN PATENT SPECIFICATION

(11) **EP 0 553 053 B1**
(45) Date of publication and mention of the grant of the patent: **10.06.1998**
(21) Application number: 93610003.1
(22) Date of filing: 21.01.1993
(51) Int. Cl.: G01V 1/38

(54) **Marine seismic method and system**
Meeresseismisches Verfahren und System
Procédé sismique marin et système

(30) Priority: 23.01.1992 DK 8992
(43) Date of publication of application: 28.07.1993
(73) Proprietor: ODEGAARD & DANNESKIOLD-SAMSOE APS, 2100 Copenhagen O (DK); TEXACO LIMITED, London SW1X 7QJ (GB)
(72) Inventor: Odegaard, John, DK-2100 Kobenhavn O (DK); Hampson, Gary, Texaco Limited, London SW1X 7QJ (GB); Jakubowicz, Helmut, Englefield Green, Surrey TW20 0DY (GB)
(74) Representative: Lund, Preben

(56) References cited:
- EP-A- 0 223 667
- EP-A- 0 273 722
- US-A- 3 413 596
- US-A- 4 006 795
- DATABASE WPI Derwent Publications Ltd., London, GB; AN 84-080501 & SU-A-1 022 090 (A.M.SEDIN)

## Description

### Field of the invention

The present invention relates to seismic prospecting at sea, generating acoustic waves.

In the concept of marine seismic recording, sound waves are used to scan the subbottom of the sea. Sound produced by a source is propagated through the water, reflected by the subbottom layers, and received by the seismic recording system. The sound source signals need to be known in order to interpret the structure of the subbottom from the sound signals received in the recording system.

### Description of related art

Seismic sources with a controllable output are commonly used in the state of the art, e.g. air guns, water guns or marine vibrators. Any other sound than that which originated from the seismic sound sources is unwanted since it may influence the quality of the seismic recordings. Important unwanted sound (noise) sources are the machinery and propeller of the seismic vessel itself. Therefore, many efforts have been made in order to reduce the noise generated by these sources.

In principle, two methods are used for marine seismic prospecting. Sound pulses are either produced at constant or controlled intervals, the echo signals from the subbottom being detected and received during the intervals, or a swept pure tone sound signal is emitted over a repeated period, whereupon a signal correlation of the received signal and the acoustic near field signal is made.

The first mentioned method is used in connection with air guns and water guns, and the second method in connection with marine vibrators.

The sound signals produced by common seismic sound sources are optimized in order to generate high sound pressure levels in a broad frequency range, typically 0-200 Hz.

Other methods of producing seismic signals are known from US Patent no. 3,684,050 and US Patent no. 3,536,157. These US patents relate to acoustic signal generators, which are towed through the water behind or beside the vessel. As a result of the water passing through the signal generators, acoustic signals are generated and emitted and may be utilized as seismic waves.

Prior art document US-A-4 006 795 mentions a ship, such as an oil tanker, propelled by steam turbines. The steam supply may be used to drive any type of steam sound source. A number of measuring devices are provided in spaced relationship in so-called ballast tanks throughout the ship. The noise from the propellers are sought dampened by isolating the ballast tanks with rubber material and by using electronic filters.

Prior art document US-A-3 413 596 employs a source boat including a vibration generator.

Prior art document Derwent abstract AN 84-080501 of SU-A-1 022 090 deals with a seismic prospecting method by which random microseismic oscillations caused by distant earthquakes, wind effects, sea breakers, transport functioning and industrial operations are recorded by a plurality of ground based receivers.

In EP-A-0 273 722 the drill bit of an oil rig is used as the seismic source.

The invention is set out in claims 1 and 2.

The preamble of claim 1 is based on EP-A-0 223 667.

Instead of reducing the noise generated by the propeller or other equipment of the vessel, the invention hereinafter explains how to use the vessel itself as a sound source, and, by correlation of the source signal with the signal received at the seismic streamer, how to obtain the required seismic data from the subbottom.

In accordance with the present invention, inherent noise from the vessel is utilized, e.g. in the form of cavitation noise from the propellers of the vessel emitting broad-band cavitation noise.

In accordance with the present invention it is also possible to carry out seismic prospecting in waters, wherein ordinary seismic survey applying towed gun arrays or vibrators would otherwise be impossible, for example in ice-covered waters. With the present invention, seismic prospecting may also be carried out by means of a submarine vessel. Another example are natural areas of particular sensitivity, wherein conventional seismic survey is not allowed due to the effect of strong sound pulses on animal life.

Furthermore, in accordance with the present invention, seismic prospecting in low temperature areas has become a much simpler task because conventional operational problems in such areas related to the use of air guns and water guns are avoided.

All or most of the normally considerable costs involved in reducing the noise emitted by the vessel which is used in connection with a seismic survey are avoided.

It is also possible to use such a propeller, which is not in use for propulsion, e.g. a bow propeller. By setting the pitch angle of the bow propeller in neutral position, the propeller may be rotated such that a suitable broad-band cavitation noise is emitted, and at the same time the vessel may be operated normally, since this has no significant influence on the operation or control of the vessel.

### Brief description of the drawings

The present invention will become fully understood from the detailed description given hereinbelow and the accompanying drawings, wherein:
- Fig. 1: shows an example of prior art marine seismic prospecting;
- Fig. 2: shows a marine seismic prospecting system according to the first embodiment of the invention;
- Fig. 3: shows a seismic prospecting system according to a second embodiment of the invention;
- Fig. 4: is a schematic illustration of cavitation noise spectrum from a rotating propeller;
- Fig. 5: shows the instrumentation set-up for the test purpose;
- Fig. 6: shows location of measurement positions in the hull of the vessel;
- Fig. 7: shows recorded propeller noise signal in a first measurement position;
- Fig. 8: shows recorded propeller noise signal in a second measurement position;
- Fig. 9: shows recorded propeller noise signal in a third measurement position;
- Fig.10: shows recorded propeller noise signal in a fourth measurement position.

### Detailed description of preferred embodiments

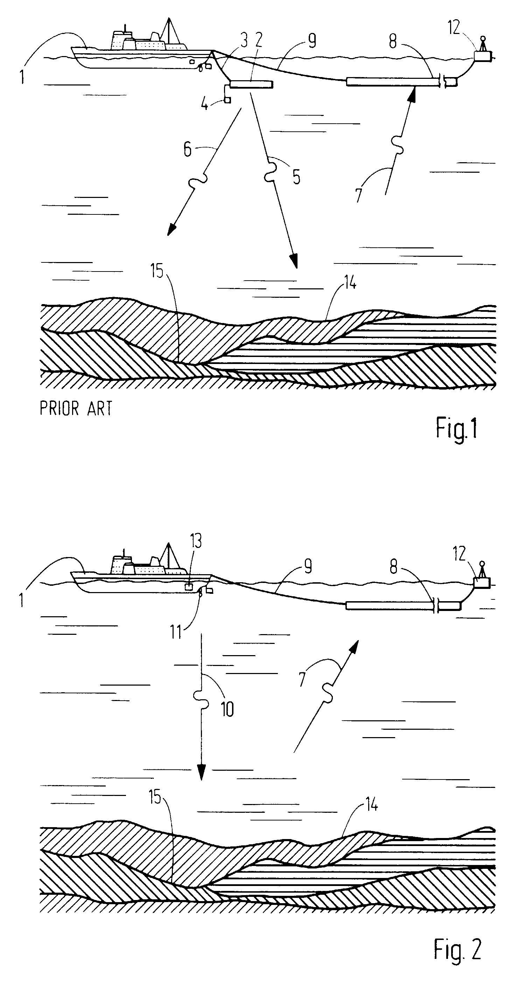

Fig. 1 illustrates a seismic marine vessel 1 which via a cable 9 is towing a commonly known streamer (hydrophone array) 8 for seismic prospecting at sea. The vessel 1 also carries a commonly known marine gun array or vibrator 2 connected by way of a fixture or a cable 3 for producing sound waves, and a transducer 4 for recording of the near-field signal 6 from the marine gun array or vibrator 2. The sound source 2 is positioned a few metres below the surface of the water. The end of the streamer 8 is connected to a commonly known tail buoy 12.

The sound source 2 is power supplied and controlled from the vessel 1 and produces a seismic sound signal towards the bottom 14 and the subbottom layers 15. The reflected signal 7 is picked up by the hydrophones in the streamer 8 and is recorded in a commonly known manner in a seismic recording system on board the vessel 1. In a subsequent signal processing, wherein the signal picked up by the transducer 4 and the signal from the hydrophones 8 are correlated, it is possible to make a survey of the subbottom for later evaluation of the structure of the subbottom substrata, for example the possibilities of extracting oil, gas, coal, etc.

During such surveys, the noise of the vessel, e.g. from the propellers of the vessel is highly undesirable and hence must be reduced as much as possible in order to obtain good measuring results. The noise have to be reduced, e.g. by using a propeller producing minimum cavitation noise.

The above described known method may be applied at appropriate depths only, and obviously cannot be applied in waters covered or filled with ice.

Fig. 2 shows a corresponding prospecting system, however, making use of the present invention, in that in this first embodiment of the present invention the propeller 11 of propulsion of the vessel 1 is used directly as a seismic wave generator. In the example shown the propeller is mounted in a conventional manner. A transducer 13 is used for detection of the near field, for example a hydrophone array, a accelerometer or the like, which will pick up the near field noise signal of the propeller 11.

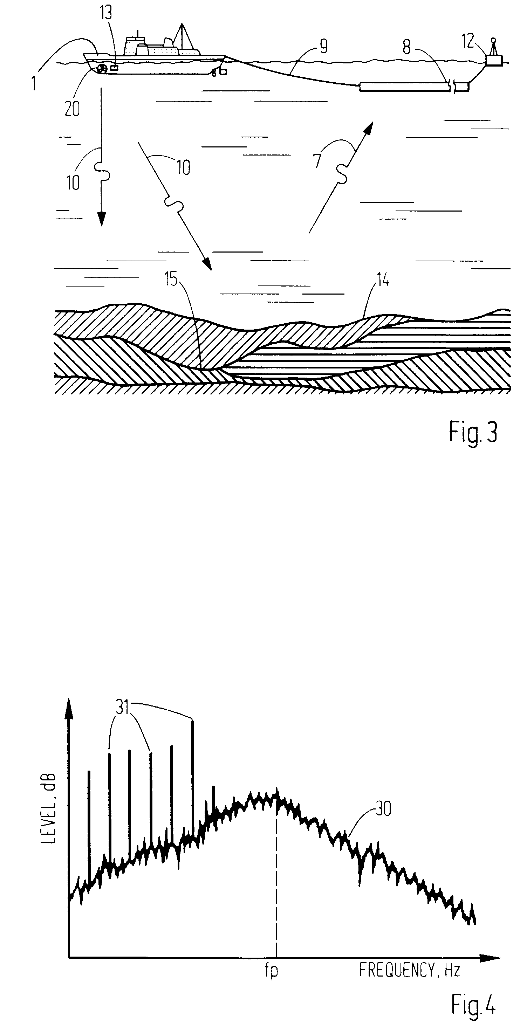

Fig. 3 shows yet another embodiment of the invention, wherein the noise generator is a bow propeller 20 of the vessel 1. The propeller blades of the bow propeller 20 are set in neutral position, i.e. at a pitch angle of 0° and are rotated at a rate of rotation, whereby broad-band noise is emitted.

The vessel shown i Fig. 2 and 3 is a common surface vessel, however, obviously the vessel could be any other type of vessel, for example a submarine to the effect that the prospecting could be carried out in ice-covered or ice-filled waters.

As far as regards ship propeller cavitation noise, it is known that the mechanism is basically the formation, growth and collapse of air bubbles caused by the reduction of local static pressure. As the fluid enters a region of low pressure, i.e. pressure below the vapour pressure of water, a bubble forms, grows to a maximum size and collapses as it leaves the low pressure region. This process takes only a very short time, and hence a pressure field is generated in the fluid resulting in radiated sound.

Generally, three types of cavitation occur on a propeller blade:
1) Tip vortex cavitation is formed at the propeller tip, due to the low pressure region formed by the high speed cross-flow from the high pressure to the low pressure side of the blade.
2) Sheet cavitation is formed as the fluid enters a low pressure region determined by the pressure distribution on the blade. Sheet cavitation is separated from the surface of the blade, forming a sheet.
3) Bubble cavitation is formed, as for sheet cavitation, due to a low pressure region determined by the pressure distribution. The bubble, however, is in direct contact with the blade surface, and as a result bubble cavitation is subjected to severe erosion of the blades.

An example of a typical spectrum of the cavitation noise at the hull above the propeller in a condition with cavitation is shown schematically in fig. 4.The resulting frequency sprectrum of cavitation noise will then consist of a broad-band contribution 30 which is shaped with a peak frequency fp and gradually decreasing noise levels below the peak frequency. Furthermore, discrete frequency components 31 will be seen at harmonics of the blade passing frequency in the low frequency region.

A practical full scale test has been made in order to measure whether an ordinary propeller of propulsion of a vessel will emit an acoustic sprectrum suitable for seismic prospecting.

An operating seismic vessel was used for the test. The vessel has four 4-stroke diesel generators supplying the electric power to four propulsion engines. Propulsion engines are connected to the propeller shaft via a reduction gear. The propulsion system consists of one controllable pitch propeller with four blades.

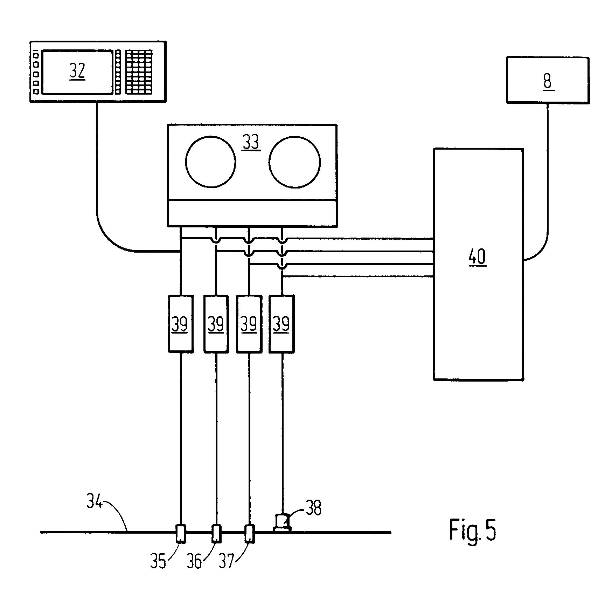

Fig. 5 illustrates the instrumentation set-up. The pressure fluctuations were measured by means of Miniature Hydrophones 35, 36, 37, Brüel & Kjær Type 8103, and the vibration signal by means of an accelerometer 38, Brüel & Kjær Type 4371. The signal was lead from the transducers through charge amplifiers 39, Brüel & Kjær Type 2635, to the recording system. The signal was recorded partially at the seismic recording system 40 of the vessel, for correlation with the signal recorded at the seismic cable 8, and partially by a FM Tape Recorder 33, Brüel & Kjær Type 7006, for spectral analysis of the noise signal. The instrumentation chain was calibrated prior to the masurements by using a hydrophone and an accelerometer calibrator, respectively. The calibration signal was recorded for calibration of the analyzing instruments. Also a real-time analyzer 32, Brüel & Kjær Type 3243, was connected for monitoring of the noise signal during the measurements. The instrumentation set-up is shown in Fig. 5. The analyzis of the recorded signals were performed with a narrow-band FFT analyzer, Brüel & Kjær Type 2033, connected to a computer and a plotter.

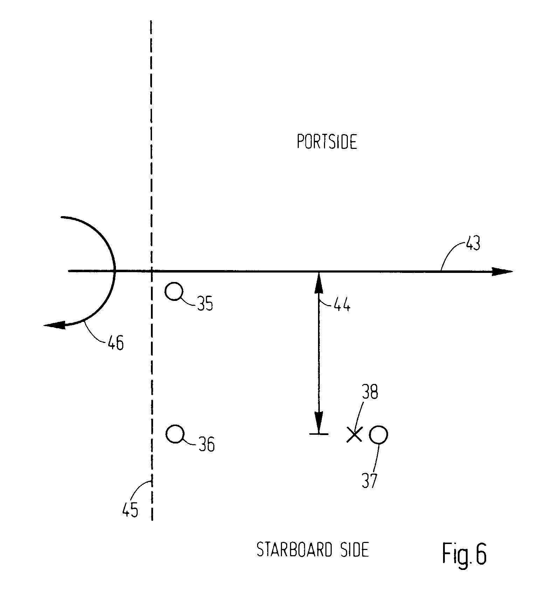

The measurements of the propeller noise were carried out with hydrophones mounted on the hull plating 34 (Fig. 5) above the propeller of the vessel in the propeller plane 45 (Fig. 6). The hydrophones were placed in bolts with a bored hole, and screwed into threads cut in the hull, so that the hydrophones were protruding approximately 15 mm from the hull plating. The maximum sound pressure generated by the propeller is expected to occur slightly off the centerline at the starboard side for a clockwise rotating propeller 46 and slightly fore of the propeller plane 45. According hereto, the measurement positions were located on the starboard side only with two positions 35, 36 approximately in the propeller plane 45, and one position 37 fore of the propeller plane. The location of the measurement positions are shown schematically in Fig. 6. Additionally, one accelerometer 38 was attached by means of a magnet to the hull plating in a position also shown in Fig. 6. The purpose of the accelerometer was to measure the vibration signal which the pressure fluctuation in the water creates in the hull plating. The arrow 43 indicates the direction of sailing, and the distance 44 is app. 1 metre.

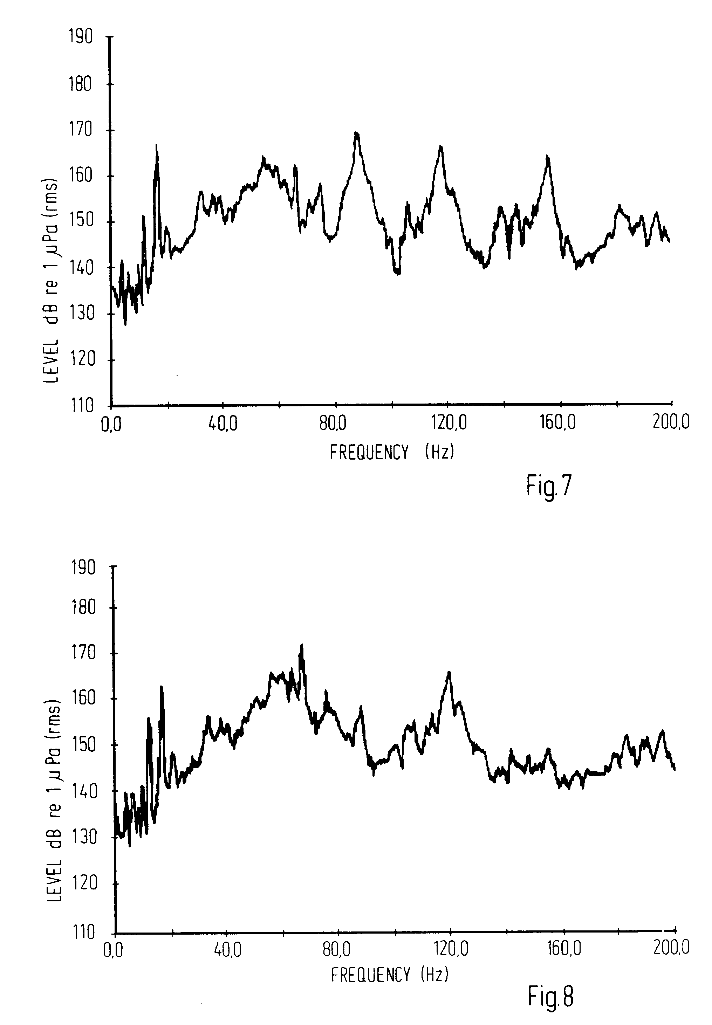

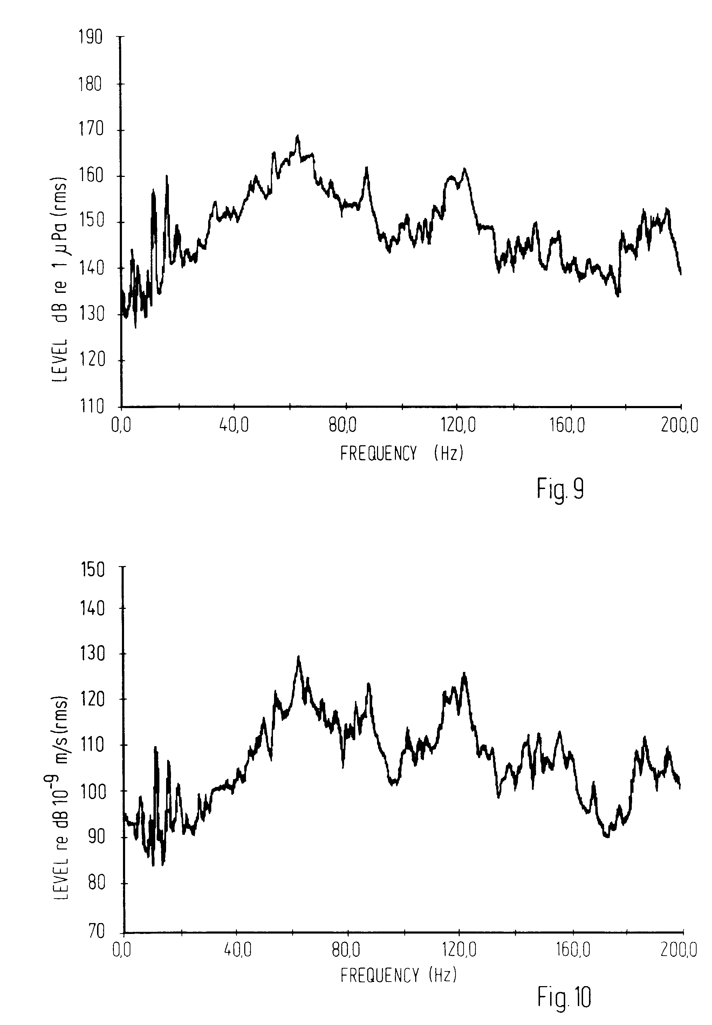

Figs. 7-10 illustrate the narrow frequency spectrum of the propeller noise measured, wherein Fig. 7 shows the measuring result from the hydrophone 35, Fig. 8 shows the measuring result from the hydrophone 36, Fig. 9 shows the measuring result from the hydrophone 37, and Fig. 10 shows the measuring result from the accelerometer 38.

The seismic signals from the hydrophones 8 as well as the near field signals from the hydrophones 35, 36, 37 and the near field signal from the accelerometer 38 were recorded in the seismic recording system 40 for subsequent data-processing, including electronic signal correlation of the echo signals from the subbottom with the detected near field waves. The result was that it was found possible to detect useful reflections.

## Claims

1. A method for generating acustic waves for marine seismic prospecting comprising:
a) navigation through the area, wherein the subbottom is to be surveyed, by a vessel (1) generating noise, which is used as seismic sound source;
b) detection of the near field signal of the cavitation noise emitted;
c) detection of reflected sound waves from the subbottom;
d) dataprocessing, including electronic signal correlation of the reflected signals from the subsurface with the detected signal,
**characterized** in that at least one vessel propeller (11, 20) is used to produce broad-band cavitation noise, which is used as the seismic sound source.

2. A marine seismic system to perform the method of claim 1 comprising the following items:
a) a seismic transducer (8) towed underwater behind the vessel (1);
b) a generator for generating and emitting seismic sound waves comprising the vessel itself;
c) at least one transducer (13) mounted on the vessel or in close proximity thereto, to receive the signal from the sound signal emitted; and
d) means (40) for signal correlation or processing of the signals received from the towed transducer (8) using the signals from the mounted transducer (13),
**characterized** in that the generator for the seismic sound waves is at least one of the propellers (11, 20) of the vessel (1).

3. A marine seismic system according to claim 1, **characterized** in that the generator for the seismic waves comprises at least one bow propeller (20), operating at a condition, whereby maximum cavitation is achieved, while the pitch angle of the propeller is 0°.

## Patentansprüche

1. Verfahren zur Erzeugung von akustischen Wellen für die maritime seismische Prospektion, mit folgenden Schritten:
a) Steuern eines Schiffes (1), das Schall erzeugt, der als seismische Schallquelle verwendet wird, durch das Gebiet, in dem der Untergrund untersucht werden soll,
b) Erfassen des Nahfeld-Signals des abgestrahlten Kavitationsschalls,
c) Erfassen reflektierter Schallwellen von dem Untergrund,
d) Datenverarbeitung unter elektronischer Signalkorrelation der reflektierten Signale von der Bodenoberfläche mit dem erfaßten Signal,
dadurch **gekennzeichnet**, daß mindestens eine Schiffsschraube (11, 20) zur Erzeugung von Breitband-Kavitationsschall verwendet wird, der als seismische Schallquelle gebraucht wird.

2. Maritimes seismisches System zur Durchführung des Verfahrens nach Anspruch 1, aufweisend:
a) einen seismischen Wandler (8), der unter Wasser hinter dem Schiff (1) geschleppt wird,
b) einen das Schiff selbst beinhaltenden Generator zur Erzeugung und Aussendung seismischer Schallwellen,
c) mindestens einen am Schiff oder in dessen unmittelbarer Nähe angebrachten Wandler (13), um von dem ausgesandten Schallsignal ein Signal zu empfangen, und
d) eine Einrichtung (40) zur Signalkorrelation oder Verarbeitung der von dem geschleppten Wandler (8) empfangenen Signale unter Verwendung der Signale von dem angebrachten Wandler (13),
dadurch **gekennzeichnet**, daß der Generator für die seismischen Schallwellen mindestens einer der Schrauben (11, 20) des Schiffs (1) ist.

3. Maritimes seismisches System nach Anspruch 2, dadurch **gekennzeichnet**, daß der Generator für die seismischen Wellen mindestens eine Bugschraube (20) umfaßt, die sich in einem Betriebszustand befindet, in dem unter einem Steigungswinkel der Schraube von 0° eine maximale Kavitation erreicht wird.

## Revendications

1. Procédé pour engendrer des ondes acoustiques en vue d'effectuer une prospection sismique marine comprenant
a) une navigation à travers la région dans laquelle le sous-sol doit être surveillé, au moyen d'un navire (1), engendrant un bruit qui est utilisé en tant que source sonore sismique ;
b) une détection du signal de champ proche du bruit de cavitation émis ;
c) une détection des ondes sonores réfléchies à partir du sous-sol ;
d) un traitement de données comprenant une corrélation du signal électronique entre les signaux réfléchis à partir de la sous-surface et le signal détecté,
caractérisé en ce qu'au moins une hélice du navire (11, 20) est utilisée pour produire un bruit de cavitation à large bande, qui est utilisé en tant que source sonore sismique.

2. Système sismique marin pour la mise en oeuvre du procédé de la revendication 1, comprenant les composants suivants :
a) un transducteur sismique (8) remorqué sous l'eau derrière le navire (1) ;
b) un générateur pour engendrer et émettre des ondes sonores sismiques comprenant le navire lui-même ;
c) au moins un transducteur (13) monté sur le navire ou à proximité proche de lui, de façon à recevoir le signal en provenance du signal sonore émis ; et
d) des moyens (40) pour la corrélation du signal ou le traitement des signaux reçus en provenance du transducteur remorqué (8) utilisant les signaux provenant du transducteur embarqué (13),
caractérisé en ce que le générateur des ondes sonores sismiques est constitué d'au moins une des hélices (11, 20) du navire (1).

3. Système sismique marin selon la revendication 2, caractérisé en ce que le générateur des ondes sismiques comprend au moins une hélice d'étrave (20), fonctionnant dans une condition dans laquelle on obtient une cavitation maximum tandis que l'angle de pas de l'hélice est de 0°.
